# EUROPÄISCHE PATENTSCHRIFT

(11) **EP 0 759 371 B1**
(45) Veröffentlichungstag und Bekanntmachung des Hinweises auf die Patenterteilung: **17.07.2002**
(21) Anmeldenummer: 96112572.1
(22) Anmeldetag: 02.08.1996
(51) Int. Cl.: B60K 25/00, B60R 16/08, B60H 1/00

(54) **Hydrostatischer Antrieb für Nebenaggregate eines Fahrzeugs**
Hydrostatic drive for vehicle auxiliry units
Entraînement hydrostatiques pour appareils auxilliaires d'un véhicule

(30) Priorität: 22.08.1995 DE 19530837
(43) Veröffentlichungstag der Anmeldung: 26.02.1997
(73) Patentinhaber: BRUENINGHAUS HYDROMATIK GMBH, 89275 Elchingen (DE)
(72) Erfinder: Vogl, Karl-Heinz, 72160 Horb (DE); Obertrifter, Bernd, 97854 Steinfeld (DE); Erkkilae, Mikko, 72160 Horb-Ihlingen (DE)
(74) Vertreter: Körber, Wolfhart, Dr. rer.nat.

(56) Entgegenhaltungen:
- DE-A- 2 208 842
- DE-A- 3 628 444
- DE-A- 3 902 138
- DE-A- 4 238 998
- DE-A- 4 337 210
- DE-A- 4 342 006

## Beschreibung

Die Erfindung betrifft einen hydrostatischen Antrieb zum Antrieb eines Lüfters und weiterer Nebenaggregate eines Fahrzeugs.

Bei dem aus der DE-A-36 28 444, bekannten hydraulischen Antrieb ist ein Antriebsmotor mit zwei Hydropumpen mit jeweils konstantem Fördervolumen verbunden, wobei die erste Hydropumpe zum Antrieb einer hydrostatischen Lenkeinrichtung und die zweite Hydropumpe zum Antrieb des Druckluftkompressors und des Lüfters dient. Der von der zweiten Hydropumpe geförderte Volumenstrom wird mittels einer hydraulischen Schaltvorrichtung zwischen einem ersten Hydromotor zum Antrieb des Druckluftkompressors und einem zweiten Hydromotor zum Antrieb des Lüfters umgeschaltet. Dabei treten jedoch Schaltzustände auf, in welchen der Lüfter für eine bestimmte Zeit nicht angetrieben ist, so daß bei Ausfall des die Temperatur des Kühlers überwachenden Temperatursensors eine Überhitzung des Kühlers auftreten kann. Ferner wird von den Konstantpumpen unnötigerweise ein nicht benötigter, überschüssiger Volumenstrom gefördert, der mittels eines Bypasses zum Druckmitteltank abgeleitet wird. Der unnötigerweise geförderte Volumenstrom erschwert die thermische Auslegung des Antriebssystems. Da der gesamte geförderte Volumenstrom des in dem hydraulischen Kreislauf verwendeten Druckmittels gekühlt werden muß, wird die bauliche Ausdehnung des Antriebs durch die notwendige Dimensionierung des Druckmittelkühlers so weit vergrößert, daß die praktische Ausführung erheblich erschwert ist.

Ein ähnlicher hydrostatischer Antrieb zum Antrieb von Nebenaggregaten eines Fahrzeugs ist aus der DE-A-39 02 138 bekannt. Im Unterschied zur DE-A-38 28 444 erfolgt das Umschalten zwischen einem ersten und zweiten in dem hydraulischen Kreislauf angeordneten Hydromotor durch ein Proportionaldrosselventil und eine 3-Wege-Druckwaage. Auch hier tritt jedoch ein Schaltzustand auf, bei welchem der Lüfter abgeschaltet ist. Ferner sind Bypaßleitungen zum Ableiten des überschüssig geförderten Volumenstroms vorgesehen, so daß die vorstehend aufgezeigten Nachteile durch diese Weiterbildung nicht überwunden werden.

Die DE-A-43 42 006 zeigt den Oberbegriff des Anspruches 1 und bildet den nächstliegende Stand der Technik.

Der vorliegenden Erfindung liegt daher die Aufgabe zugrunde, einen hydrostatischen Antrieb zum Antrieb von Nebenaggregaten eines Fahrzeugs nach dem Oberbegriff des Anspruches 1 so weiterzubilden, daß der Wirkungsgrad des Antriebs bei gleichzeitger Reduzierung der Baugröße erhöht wird.

Die Aufgabe wird durch die kennzeichnenden Merkmale des Anspruches 1 in Verbindung mit den gattungsbildenden Merkmalen gelöst.

Erfindungsgemäß wird eine hinsichtlich des Fördervolumens regelbare Hydropumpe verwendet und der den Lüfter antreibende Hydromotor wird von einer Verteilereinrichtung mit einem Mindestvolumenstrom versorgt, so daß eine vorgegebene Mindestdrehzahl des Lüfters nicht unterschritten wird.

Die Ansprüche 2 bis 12 betreffen vorteilhafte Weiterbildungen des erfindungsgemäßen hydrostatischen Antriebs.

Nach Anspruch 2 kann zum Einregeln der Konstantdrehzahlwelle auf eine konstante Drehzahl ein mit dieser gekoppelter Hilfs-Hydromotor vorgesehen sein, der über eine Förderleitung, dessen Förderstrom von einem Förderstrom-Sensor erfaßt wird, mit dem hydraulischen Kreislauf verbunden ist. Der von dem Förderstrom-Sensor erfaßte Förderstrom kann als Regelgröße verwendet werden, da dieser bei einem konstanten Verdrängungsvolumen des Hilfs-Hydromotors der Drehzahl der Konstantdrehzahlwelle proportional ist. Falls der erfaßte Förderstrom und somit die Drehzahl der Konstantdrehzahlwelle größer als ein vorgegebener Sollwert ist, wird das Verdrängungsvolumen des regelbaren Hydromotors und somit das von diesem auf die Konstandrehzahlwelle ausgeübte Drehmoment reduziert. Bei einer gegenüber dem Sollwert verminderten Drehzahl der Konstantdrehzahlwelle wird umgekehrt vorgegangen. Als Förderstrom-Sensor kann nach Anspruch 3 eine drosselartige Verengung vorgesehen sein, an der sich eine dem Förderstrom proportionale Druckdifferenz einstellt. Diese Druckdifferenz kann entsprechend den Ansprüchen 4 und 5 als Stellgröße für eine hydraulische Regelvorrichtung verwendet werden.

Die Verteilereinrichtung kann nach Anspruch 7 mehrere Schaltventile umfassen, die in den die Hydromotoren versorgenden Zweigleitungen des hydraulischen Kreislaufs angeordnet sind. Dabei kann das Schaltventil in der Zweigleitung, die den Hydromotor zum Antrieb des Lüfters versorgt, nach Anspruch 8 so ausgebildet sein, daß das Schaltventil zwischen einer voll geschlossenen Schaltstellung und einer Schaltstellung mit gedrosseltem Durchfluß umschaltbar ist.

Falls mittels der Konstantdrehzahlwelle mehrere Nebenaggregate angetrieben werden sollen, kann vorteilhaft ein Verteilergetriebe nachgeschaltet sein, das gleichzeitig die Anpassung an die benötigten Drehzahlen vornimmt. Ferner können einzelne Nebenaggregate nach Anspruch 10 über fernauslösbare Kupplungen an das Verteilergetriebe lösbar koppelbar sein. Die Konstantdrehzahlwelle ist für den Antrieb des Klima-Kompressors für die Klimaanlage besonders vorteilhaft.

Nachstehend wird die Erfindung anhand bevorzugter Ausführungsbeispiele unter Bezugnahme auf die Zeichnung näher beschrieben. Dabei zeigt die
- Fig. 1: einen Schaltplan eines hydrostatischen Antriebs gemäß einem ersten Ausführungsbeispiel der Erfindung;
- Fig. 2: einen Schaltplan eines hydrostatischen Antriebs gemäß einem zweiten Ausführungsbeispiel der Erfindung;
- Fig. 3: eine detailliertere Darstellung der Regelvorrichtung zum Regeln der Konstantdrehzahlwelle gemäß einem ersten Ausführungsbeispiel;
- Fig. 4: eine detailliertere Darstellung der Regelvorrichtung zum Regeln der Konstantdrehzahlwelle gemäß einem zweiten Ausführungsbeispiel.

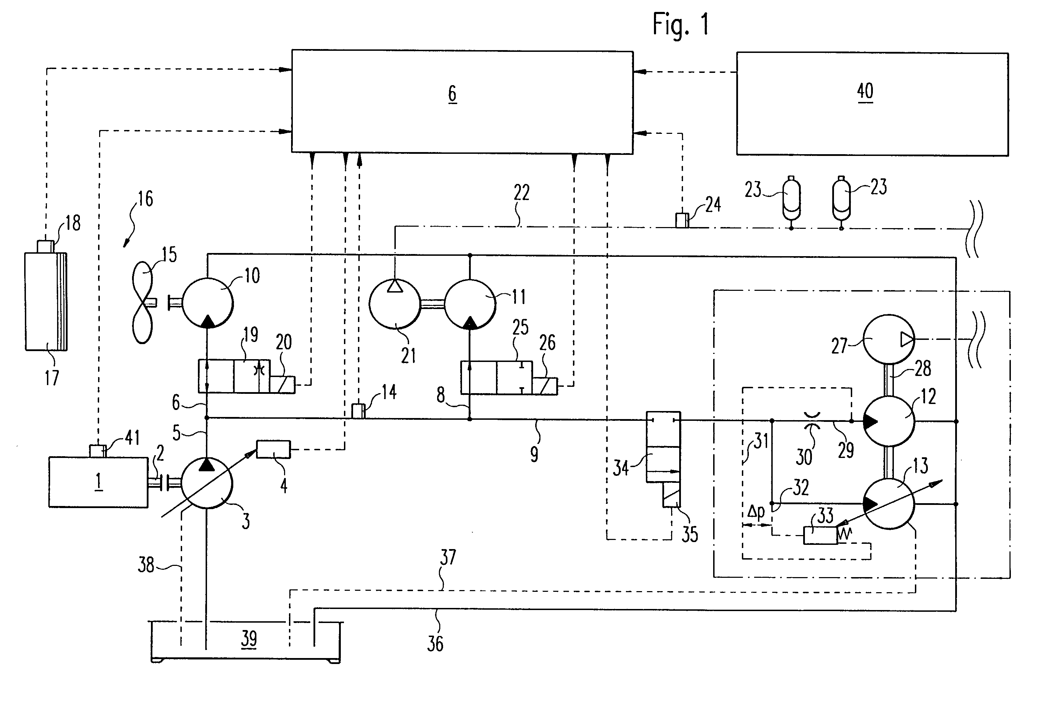

Figur 1 zeigt ein erstes Ausführungsbeispiel des erfindungsgemäßen Antriebs zum Antrieb von Nebenaggregaten eines Fahrzeugs. Ein Antriebsmotor 1 ist mittels einer Antriebsmotorwelle 2 mit einer regelbaren Hydropumpe 3 verbunden. Das Verdrängungsvolumen der Hydropumpe 3 ist mittels einer Verstellvorrichtung 4 entsprechend der Vorgabe durch eine elektronische Steuereinheit 6 einstellbar. Die Hydropumpe 3 ist über einen hydraulischen Kreislauf 5, 6, 8, 9, 36, der einzelne Zweigleitungen 6, 8 oder 9 aufweist, mit den Hydromotoren 10, 11, 12 und 13 verbunden. Die Drehzahl des Antriebsmotors 1 wird von der elektronischen Steuereinheit 6 mittels des Drehzahl-Sensors 41 erfaßt.

Der Druck in der Hochdruckleitung 5 des hydraulischen Kreislaufs kann von der elektronischen Steuereinheit 6 mittels eines Drucksensors 14 erfaßt und als Regelgröße für die Verstellung der Verstellvorrichtung 4 verwendet werden.

Der erste Hydromotor 10 treibt ein Lüfterrad 15 eines Lüfters 16 an. Der Lüfter 16 dient zum Kühlen des Kühlers 17, dessen Temperatur mittels eines Temperatur-Sensors 18 durch die elektronische Steuereinheit 6 erfaßt wird. In der den Hydromotor 10 versorgenden Zweigleitung 6 befindet sich ein erstes Schaltventil 19, das von der elektronischen Steuereinheit 6 über ein Betätigungselement 20 betätigt werden kann. Das erste Schaltventil 19 ist zwischen einer ersten Schaltstellung, in der das Schaltventil voll geöffnet ist, und einer zweiten Schaltstellung, in der das Schaltventil 19 einen gedrosselten Durchfluß aufweist, schaltbar. In der gedrosselten Stellung des Schaltventils 19 ist dabei sichergestellt, daß das Lüfterrad 15 eine vorgegebene Mindestdrehzahl aufweist, die ausreicht, eine gewisse Mindestkühlung des Kühlers 17 zu gewährleisten. Bei Ausfall des gesamten Regelsystems oder des Temperatur-Sensors 18 wird das Schaltventil 19 geöffnet, um das Lüfterrad 15 mit erhöhter Drehzahl anzutreiben.

Ein zweiter Hydromotor 11 dient zum Antrieb eines Druckluftkompressors 21, der über eine Druckluftleitung 22 mit Druckluftvorratsbehältern 23 in Verbindung steht. Der Luftdruck in der Druckluftleitung 22 wird von der elektronischen Steuereinheit 6 mittels eines Druckluft-Sensors 24 erfaßt. Bei Unterschreiten eines vorgegebenen Druckluft-Schwellwerts in der Druckluftleitung 22 wird das Schaltventil 25 durch Betätigen des Betätigungselementes 26 geschlossen, bis der Druck in der Druckluftleitung 22 einen oberen Druckluftschwellwert überschritten hat.

Der hinsichtlich seines Verdrängungsvolumens regelbare Hydromotor 13 und der mit diesem gekoppelte Hilfs-Hydromotor 12 mit konstantem Verdrängungsvolumen dienen zum Antrieb eines Klima-Kompressors 27 zum Betreiben einer nicht dargesellten Klimaanlage. Der Klima-Kompressor 27 ist auf einer Konstantdrehzahlwelle 28 angeordnet. Zum Einregeln der Drehzahl der Konstantdrehzahlwelle 28 auf einen vorgegebenen Sollwert ist in der Förderleitung 29 des Hilfs-Hydromotors 12 ein Förderstrom-Sensor 30 vorgesehen. Der Förderstrom-Sensor 30 erfaßt den Förderstrom, d.h. das Durchflußvolumen pro Zeiteinheit, in der Förderleitung 29. Durch die Verwendung eines Hilfs-Hydromotors mit konstantem Verdrängungsvolumen ist der Förderstrom in der Förderstromleitung 29 der Drehzahl der Konstantdrehzahlwelle 28 proportional. Im dargestellten Ausführungsbeispiel ist der Förderstrom-Sensor 30 als drosselartige Verengung in Form einer Meßblende ausgebildet. An der Verengung des Förderstrom-Sensors 30 entsteht daher eine Druckdifferenz, die dem zu erfassenden Förderstrom proportional ist. Die Druckdifferenz Δ p wird über zwei hydraulische Meßleitungen 31 und 32 einer Verstellvorrichtung für den regelbaren Hydromotor 13 zugeführt. Dabei wird das Verdrängungsvolumen des regelbaren Hydromotors 13 verringert, wenn der von dem Förderstrom-Sensor erfaßte Förderstrom und somit die Drehzahl der Konstantdrehzahlwelle 28 größer als ein vorgegebener Schwellwert ist. Durch das Zurückschwenken des regelbaren Hydromotors 13 auf ein geringeres Verdrängungsvolumen wird das von diesem auf die Konstantdrehzahlwelle 28 ausgeübte Drehmoment reduziert. Dadurch vermindert sich die Drehzahl der Konstantdrehzahlwelle 28, bis der vorgegebene Sollwert wieder erreicht ist. Umgekehrt wird der regelbare Hydromotor 13 auf ein größeres Verdrängungsvolumen weiter ausgeschwenkt, wenn der von dem Förderstrom-Sensor 30 erfaßte Förderstrom und damit die Drehzahl der Konstantdrehzahlwelle 28 geringer als ein vorgegebener Sollwert ist. Entsprechend wird das von dem regelbaren Hydromotor 13 auf die Konstantdrehzahlwelle 28 ausgeübte Drehmoment erhöht, bis der vorgegebene Sollwert wieder erreicht ist.

Auch der Antriebseinrichtung für die Konstantdrehzahlwelle 28 ist ein Schaltventil 34 zugeordnet, das durch die elektronische Steuereinheit 6 mittels des Betätigungselementes 35 schaltbar ist. Somit kann die von dem Klima-Kompressor 27 betriebene Klimaanlage zu- und abgeschaltet werden.

Der hydraulische Kreislauf wird durch eine Rückführleitung 36 und Leckfluidleitungen 37 und 38 geschlossen, die zu einem Druckmittel-Tank 39 führen.

Das in Figur 1 dargestellte Ausführungsbeispiel dient insbesondere zur Verwendung in Bussen und anderen Personentransportfahrzeugen. Die elektronische Steuereinheit 6 wird dabei von der zentralen Elektronikeinheit 40 des Fahrzeugs aktiviert. Den einzelnen Nebenaggregaten 16, 21, 27 kann dabei eine prioritätsbezogene Zuordnung zukommen. Z.B. kann - wenn die von der Hydropumpe 3 zur Verfügung gestellte Leistung nicht zum gleichzeitigen Betrieb sämtlicher Aggregate ausreicht - der Klima-Kompressor 27 abgeschaltet werden, wenn der Druckluft-Kompressor 21 zugeschaltet wird. Dem Druckluft-Kompressor kommt dabei wegen der vorrangigen Betätigung der pneumatisch betriebenen Eingangstüren und der Bremsanlage eine größere Priorität als der Klimaanlage zu.

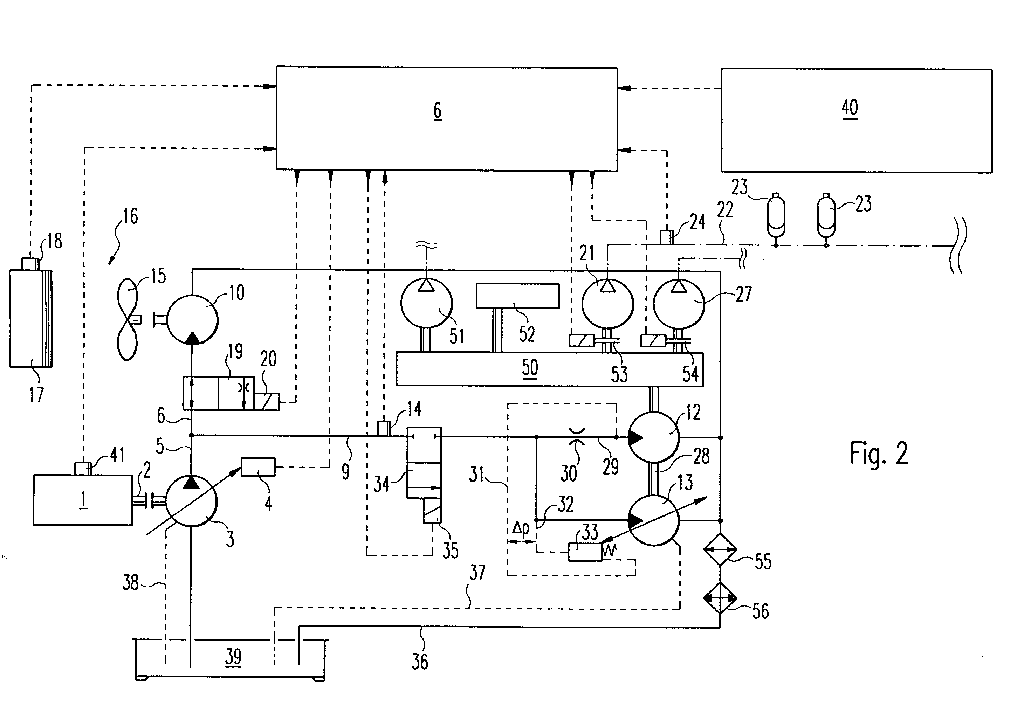

Figur 2 zeigt ein zweites Ausführungsbeispiel des erfindungsgemäßen Antriebs für die Nebenaggregate eines Fahrzeugs. Dieser Antrieb ist insbesondere zum Einsatz in Nutzfahrzeugen geeignet. Die bereits anhand der Figur 1 beschriebenen Komponenten sind mit den gleichen Bezugszeichen versehen, so daß sich eine wiederholende Beschreibung erübrigt.

Das Ausführungsbeispiel nach Figur 2 unterscheidet sich von jenem nach Figur 1 dadurch, daß der Konstantdrehzahlwelle 28 ein Verteilergetriebe 50 nachgeschaltet ist, so daß mehrere Nebenaggregate 21, 27, 51 und 52 von der Konstantdrehzahlwelle 28 angetrieben werden können. Im in Figur 2 dargestellten Ausführungsbeispiel sind dies der Klima-Kompressor 27, der Druckluft-Kompressor 21, eine Ölpumpe 51 und ein elektrischer Generator 52. Einzelne Nebenaggregate können mittels fernauslösbarer Kupplungen 53 und 54 lösbar an das Verteilergetriebe 50 gekoppelt werden. Das Verteilergetriebe 50 kann gleichzeitig zur entsprechenden Über- und Untersetzung der Drehzahl der Konstantdrehzahlwelle 28 auf die für das entsprechende Nebenaggregat vorgesehene Antriebsdrehzahl dienen.

Weiter sind in Figur 2 ein Druckmittelkühler 55 und ein Filter 56 dargestellt, die selbstverständlich auch beim Ausführungsbeispiel nach Figur 1 von Nutzen sind.

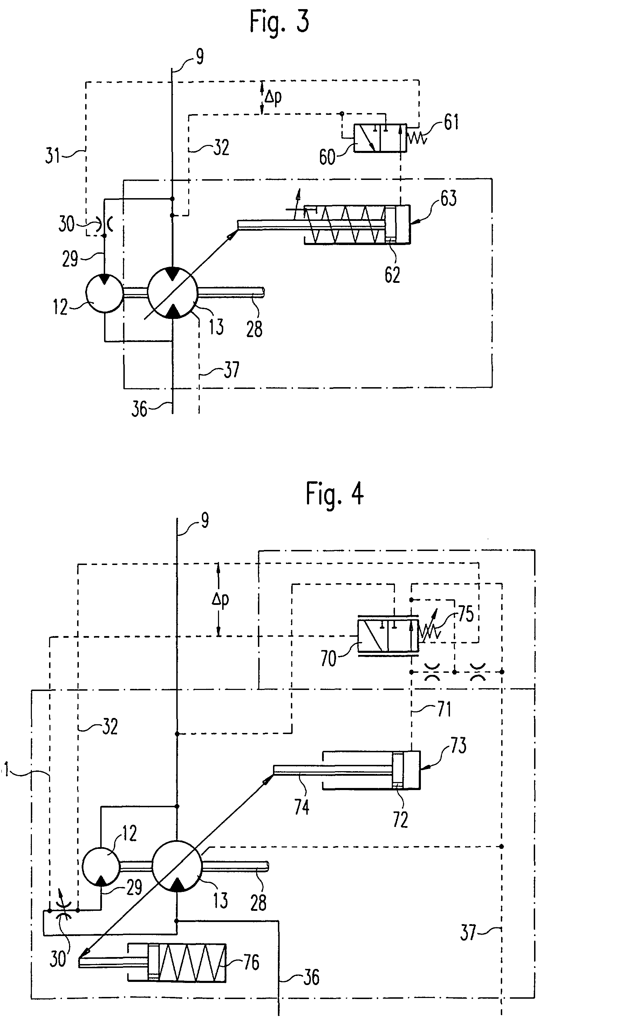

Die Figuren 3 und 4 zeigen konkrete Ausgestaltungen der Drehzahlregelung der Konstantdrehzahlwelle 28. Wie bereits beschrieben, sind an der Zweigleitung 9 des hydraulischen Kreislaufs der Hydromotor 13 mit regelbarem Verdrängungsvolumen und der Hilfs-Hydromotor 12 mit konstantem Verdrängungsvolumen parallel angeordnet. Beide Hydromotoren 12 und 13 sind an die Konstantdrehzahlwelle 28 gekoppelt. Der Förderstrom-Sensor 30 ist bei den Ausführungsbeispielen nach den Figuren 3 und 4 als drosselartige Verengung ausgebildet.

Im Ausführungsbeispiel nach Figur 3 dient die Druckdifferenz p zwischen den hydraulischen Meßleitungen 31 und 32 zur Ansteuerung eines Schaltventils 60 entgegen der Federkraft einer Rückstellfeder 61. Sobald die Druckdifferenz zwischen den hydraulischen Meßleitungen 31 und 32 einen durch die Rückstellfeder 61 vorgegebenen Schwellwert überschreitet, wird der Kolben 62 eines Stellgliedes 63 mit einem Arbeitsdruck aus der Zweigleitung 9 des hydraulischen Kreislaufs beaufschlagt, um den regelbaren Hydromotor 13 auf ein geringeres Verdrängungsvolumen zurückzuschwenken und somit das von dem regelbaren Hydromotor 13 auf die Konstantdrehzahlwelle 28 ausgeübte Drehmoment zu reduzieren.

Figur 4 zeigt ein weiteres Ausführungsbeispiel der Regelvorrichtung zur Regelung der Drehzahl der Konstantdrehzahlwelle 28. In der Förderleitung 29 des Hilfs-Hydromotors 12 ist als Förderstrom-Sensor 30 eine drosselartige Verengung vorgesehen, deren Querschnitt variierbar ausgebildet sein kann. Die Druckdifferenz Δ p zwischen den hydraulischen Meßleitungen 31 und 32 dient der Ansteuerung eines Steuerventils 70, das die Arbeitsdruckleitung 71 mit einem Arbeitsdruck beaufschlagt, der der Druckdifferenz zwischen den Meßleitungen 31 und 32 proportional ist. Das Steuerventil 70 ist dazu mit der Zweigleitung 9 und der zum Druckmitteltank 39 führenden Leitung 37 verbunden. Der Arbeitsdruck in der Arbeitsdruckleitung 71 wirkt auf den Kolben 72 des Stellgliedes 73 ein und verstellt über die Kolbenstange 74 die Einstellung des Verdrängungsvolumens des regelbaren Hydromotors 13. Dabei wirkt dem Arbeitsdruck die Rückstellfeder 76 entgegen.

Wie bereits beschrieben, bewirkt eine Zunahme der Drehzahl der Konstantdrehzahlwelle 28 eine Zunahme des Förderstroms durch den konstanten Hilfs-Hydromotor 12 und somit eine Zunahme der Druckdifferenz zwischen den hydraulischen Meßleitungen 31 und 32. Dies führt zu einer Zunahme des Arbeitsdrucks in der Arbeitsdruckleitung 71 und somit zum Zurückschwenken des regelbaren Hydromotors 13 auf ein geringeres Verdrängungsvolumen, so daß der regelbare Hydromotor 13 ein reduziertes Drehmoment auf die Konstantdrehzahlwelle 28 ausübt. Die vorgegebene Solldrehzahl der Konstantdrehzahlwelle 28 wird somit wieder eingeregelt. Umgekehrt bewirkt eine gegenüber der Solldrehzahl verminderte Drehzahl der Konstantdrehzahlwelle 28 einen verminderten Förderstrom durch den Hilfs-Hydromotor 12 und somit eine verminderte Druckdifferenz zwischen den Meßleitungen 31 und 32. Dies hat einen verminderten Arbeitsdruck in der Arbeitsdruckleitung 71 zur Folge, wodurch der regelbare Hydromotor 13 auf ein größeres Verdrängungsvolumen weiter ausgeschwenkt wird, so daß dieser ein erhöhtes Drehmoment auf die Konstantdrehzahlwelle 28 ausübt, bis der vorgegebene Sollwert der Drehzahl wieder erreicht ist.

Der Sollwert der Drehzahl der Konstantdrehzahlwelle 28 läßt sich sowohl durch Justieren der Rückstellfeder 75 des Steuerventils 70 als auch des Querschnitts der Verengung des Förderstrom-Sensors 30 vorgeben. Die Konstantdrehzahlwelle 28 dient vornehmlich zum Antrieb des Klima-Kompressors für die Klimaanlage. Sie ist jedoch auch für den Antrieb weiterer Nebenaggregate von Vorteil.

Die Erfindung ist nicht auf die vorbeschriebenen Ausführungsbeispiele beschränkt. Insbesondere kann die anhand der Figuren 3 und 4 beschriebene hydraulische Ausgestaltung des Regelkreislaufs auch durch entsprechende elektronische oder pneumatische Komponenten ersetzt werden. Ferner kann anstelle der elektromagnetischen Einwirkung der elektronischen Steuereinheit 6 auf die Verstellvorrichtung 4 und die Betätigungselemente 20, 26 und 35 auch eine hydraulische oder pneumatische Einwirkung vorgesehen sein.

Ferner kann anstelle des Hilfs-Hydromotors 12 und des Förderstrom-Sensors 30 auch jede andere geeignete Einrichtung zum Erfassen der Drehzahlwelle 28 und zum Nachregeln derselben Verwendung finden.

## Patentansprüche

1. Hydrostatischer Antrieb eines Lüfters (16) und weiterer Nebenaggregate (21, 27, 51, 52) eines Fahrzeugs mit
einem Antriebsmotor (1) und
einem hydraulischen Kreislauf (5, 6, 8, 9, 36), in welchem eine an den Antriebsmotor (1) gekoppelte Hydropumpe (3),
ein erster Hydromotor (10) zum Antrieb des Lüfters (16) und
weitere Hydromotoren (11-13) zum Antrieb der weiteren Nebenaggregate (21, 27, 51, 52) angeordnet sind,
wobei das Fördervolumen der Hydropumpe (3) regelbar ist, und wobei
daß zum Antrieb zumindest eines der weiteren Nebenaggregate (27) eine Konstantdrehzahlwelle (28) vorgesehen ist, die von einem regelbaren Hydromotor (13) angetrieben wird, dessen Verdrängungsvolumen von einer Regelvorrichtung (31-33) so geregelt wird, daß die Konstantdrehzahlwelle (28) mit im wesentlichen konstanter Drehzahl rotiert,
**dadurch gekennzeichnet,**
**daß** in dem hydraulischen Kreislauf (5, 6, 8, 9, 36) eine Verteilereinrichtung (19, 25, 34) zum Verteilen des von der Hydropumpe (3) geförderten Volumenstroms auf die einzelnen Hydromotoren (10-13) vorgesehen ist, die den ersten Hydromotor (10) zumindest mit einem Mindest-Volumenstrom versorgt, so daß eine vorgegebene Mindestdrehzahl des Lüfters (16) nicht unterschritten wird.

2. Hydrostatischer Antrieb nach Anspruch 1,
**dadurch gekennzeichnet,**
**daß** mit der Konstantdrehzahlwelle (28) ein Hilfs-Hydromotor (12) gekoppelt ist, der mit dem hydraulischen Kreislauf (5, 6, 8, 9, 36) über eine Förderleitung (29) verbunden ist, deren Förderstrom von einem Förderstrom-Sensor (30) erfaßt wird und
**daß** die Regelvorrichtung (31-33) das Verdrängungsvolumen des die Konstantdrehzahlwelle (28) antreibenden, regelbaren Hydromotors (13) bei Zunahme des von dem Förderstrom-Sensor (30) erfaßten Förderstroms reduziert und mit Abnahme des erfaßten Förderstroms vergrößert.

3. Hydrostatischer Antrieb nach Anspruch 2,
**dadurch gekennzeichnet,**
**daß** der Förderstrom-Sensor (30) durch eine drosselartige Verengung gebildet ist, an der sich eine dem Förderstrom proportionale Druckdifferenz einstellt.

4. Hydrostatischer Antrieb nach Anspruch 2 oder 3,
**dadurch gekennzeichnet,**
**daß** die Regelvorrichtung (31, 32, 60-62) ein Schaltventil (60) umfaßt, das ein das Verdrängungsvolumen des regelbaren Hydromotors (13) verstellenden Stellgliedes (63) mit der Hochdruckleitung (9) des hydraulischen Kreislaufs (5, 6, 8, 9, 36) verbindet, um das Verdrängungsvolumen des regelbaren Hydromotors (13) zu reduzieren, wenn der von dem Förderstrom-Sensor (30) erfaßte Förderstrom einen vorgegebenen Förderstrom überschreitet.

5. Hydrostatischer Antrieb nach Anspruch 2 oder 3,
**dadurch gekennzeichnet,**
**daß** die Regelvorrichtung (31, 32, 70-76) ein mit der Hochdruckleitung (9) des hydraulischen Kreislaufs (5, 6, 8, 9, 36) und einem Druckmitteltank (39) verbundenes Steuerventil (70) umfaßt, das ein das Verdrängungsvolumen des regelbaren Hydromotors (13) verstellendes Stellglied (73) mit einem Arbeitsdruck beaufschlagt, der von dem durch den Förderstrom-Sensor (30) erfaßten Förderstrom abhängt.

6. Hydrostatischer Antrieb nach Anspruch 5 und 3,
**dadurch gekennzeichnet,**
**daß** das Stellglied (73) mit einem der Druckdifferenz an dem Förderstrom-Sensor (30) proportionalen Arbeitsdruck beaufschlagt wird.

7. Hydrostatischer Antrieb nach einem der Ansprüche 1 bis 6,
**dadurch gekennzeichnet,**
**daß** die Verteilereinrichtung mehrere Schaltventile (19, 25, 34) umfaßt, die in die Hydromotoren (10-13) versorgenden Zweigleitungen (6, 8, 9) des hydraulischen Kreislaufs (5, 6, 8, 9, 36) angeordnet sind.

8. Hydrostatischer Antrieb nach Anspruch 7,
**dadurch gekennzeichnet,**
**daß** das Schaltventil (19) in der Zweigleitung (6), die den ersten Hydromotor (10) versorgt, zwischen einer ersten Schaltstellung, in der das Schaltventil (19) voll geschlossen ist, und einer zweiten Schaltstellung, in der das Schaltventil einen geöffneten Durchfluß aufweist, schaltbar ist.

9. Hydrostatischer Antrieb nach einem der Ansprüche 1 bis 8,
**dadurch gekennzeichnet,**
**daß** der Konstantdrehzahlwelle (28) ein Verteilergetriebe (50) nachgeschaltet ist, um mehrere Nebenaggregate parallel anzutreiben.

10. Hydrostatischer Antrieb nach Anspruch 9,
**dadurch gekennzeichnet,**
**daß** einzelne Nebenaggregate (21, 27) über fernauslösbare Kupplungen (53, 54) mit dem Verteilergetriebe (50) lösbar koppelbar sind.

11. Hydrostatischer Antrieb nach einem der Ansprüche 1 bis 10,
**dadurch gekennzeichnet,**
**daß** es sich bei den weiteren Nebenaggregaten (21, 27, 51, 52) um einen Klima-Kompressor (27) für die Klimaanlage und/oder einen Druckluft-Kompressor (21) und/oder eine Ölpumpe (51) und/oder einen elektrischen Generator (52) handelt.

12. Hydrostatischer Antrieb nach Anspruch 11,
**dadurch gekennzeichnet,**
**daß** zumindest der Klima-Kompressor (27) von der Konstantdrehzahlwelle (28) angetrieben ist.

## Claims

1. Hydrostatic drive of a fan (16) and further auxiliary units (21, 27, 51, 52) of a vehicle with
a drive motor (1) and
a hydraulic circuit (5, 6, 8, 9, 36), in which are arranged a hydraulic pump (3) coupled to the drive motor (1),
a first hydraulic motor (10) for driving the fan (16) and
further hydraulic motors (11-13) for driving the further auxiliary units (21, 27, 51, 52),
the delivery volume of the hydraulic pump (3) being regulable, and, for driving at least one of the further auxiliary units (27), there being provided a constant speed shaft (28) which is driven by a regulable hydraulic motor (13), the displacement volume of which is regulated by a regulating device (31-33) such that the constant speed shaft (28) rotates at substantially constant speed,
**characterised in that** a distribution device (19, 25, 34) for distributing the volume flow, delivered by the hydraulic pump (3), to the individual hydraulic motors (10-13) is provided in the hydraulic circuit (5, 6, 8, 9, 36), the distribution device supplying the first hydraulic motor (10) at least with a minimum volume flow, so that a preset minimum speed of the fan (16) is not undershot.

2. Hydrostatic drive according to Claim 1, **characterised in that** an auxiliary hydraulic motor (12), which is connected to the hydraulic circuit (5, 6, 8, 9, 36) via a delivery line (29), the delivery flow of which is detected by a delivery-flow sensor (30), is connected to the constant speed shaft (28), and **in that** the regulating device (31-33) reduces the displacement volume of the regulable hydraulic motor (13) driving the constant speed shaft (28) when the delivery flow detected by the delivery-flow sensor (30) increases and increases it when the detected delivery flow decreases.

3. Hydrostatic drive according to Claim 2, **characterised in that** the delivery-flow sensor (30) is formed by a throttle-like narrowing, at which a pressure difference proportional to the delivery flow arises.

4. Hydrostatic drive according to Claim 2 or 3, **characterised in that** the regulating device (31, 32, 60-62) comprises a switching valve (60) which connects an actuator (63), which adjusts the displacement volume of the regulable hydraulic motor (13), to the high-pressure line (9) of the hydraulic circuit (5, 6, 8, 9, 36), in order to reduce the displacement volume of the regulable hydraulic motor (13) if the delivery flow detected by the delivery-flow sensor (30) exceeds a preset delivery flow.

5. Hydrostatic drive according to Claim 2 or 3, **characterised in that** the regulating device (31, 32, 70-76) comprises a control valve (70), which is connected to the high-pressure line (9) of the hydraulic circuit (5, 6, 8, 9, 36) and to a pressure-medium tank (39) and admits to an actuator (73), which adjusts the displacement volume of the regulable hydraulic motor (13), a working pressure which depends on the delivery flow detected by the delivery-flow sensor (30).

6. Hydrostatic drive according to Claim 5 and 3, **characterised in that** the actuator (73) has admitted to it a working pressure proportional to the pressure difference at the delivery-flow sensor (30).

7. Hydrostatic drive according to one of Claims 1 to 6, **characterised in that** the distribution device comprises a plurality of switching valves (19, 25, 34) which are arranged in branch lines (6, 8, 9) of the hydraulic circuit (5, 6, 8, 9, 36) which supply the hydraulic motors (10-13).

8. Hydrostatic drive according to Claim 7, **characterised in that** the switching valve (19) in the branch line (6) which supplies the first hydraulic motor (10) is switchable between a first switching position, in which the switching valve (19) is fully closed, and a second switching position, in which the switching valve has an open flow.

9. Hydrostatic drive according to one of Claims 1 to 8, **characterised in that** a power divider (50) is connected downstream of the constant speed shaft (28) in order to drive a plurality of auxiliary units in parallel.

10. Hydrostatic drive according to Claim 9, **characterised in that** individual auxiliary units (21, 27) can be releasably coupled to the power divider (50) via remotely actuable couplings (53, 54).

11. Hydrostatic drive according to one of Claims 1 to 10, **characterised in that** the further auxiliary units (21, 27, 51, 52) are an air-conditioner compressor (27) for the air conditioner and/or a compressed-air compressor (21) and/or an oil pump (51) and/or an electric generator (52).

12. Hydrostatic drive according to Claim 11, **characterised in that** at least the air-conditioner compressor (27) is driven by the constant speed shaft (28).

## Revendications

1. Dispositif d'entraînement hydrostatique pour un ventilateur (16) et d'autres appareils auxiliaires (21, 27, 51, 52) d'un véhicule, comportant,
un moteur d'entraînement (1),
un circuit hydrauliques (5, 6, 8, 9, 36), dans lequel sont disposés
une pompe hydraulique (3) couplée au moteur d'entraînement (1),
un premier moteur hydraulique (10) servant à entraîner le ventilateur (16), et
d'autres moteurs hydrauliques (11-13) servant à entraîner les autres appareils auxiliaires (21, 27, 51, 52),
dans lequel le volume de refoulement de la pompe hydraulique (3) est réglable et dans lequel pour l'entraînement d'au moins l'un des autres appareils auxiliaires (27) il est prévu un arbre (28) à vitesse de rotation constante, qui est entraîné par un moteur hydraulique réglable (13), dont le volume de refoulement est réglable par un dispositif de réglage (31-33) de telle sorte que l'arbre (28) à vitesse de rotation constante tourne avec une vitesse de rotation essentiellement constante,
**caractérisé en ce que**
dans le circuit hydraulique (5, 6, 8, 9, 36) il est prévu un dispositif de distribution (19, 25, 34) qui sert à distribuer le flux volumétrique refoulé par la pompe hydraulique (3) entre les différents moteurs hydrauliques (10-13) et qui alimente le premier moteur hydraulique (10) au moins avec un flux volumétrique minimum de sorte que la vitesse de rotation du ventilateur (16) ne tombe pas au-dessous d'une vitesse de rotation minimale prédéterminée.

2. Dispositif d'entraînement hydrostatique selon la revendication 1, **caractérisé en ce**
**qu'**à l'arbre (28) à vitesse de rotation constante est couplé un moteur hydraulique auxiliaire (12), qui est relié au circuit hydraulique (5, 6, 8, 9, 36) par l'intermédiaire d'une canalisation de refoulement (29), dont le flux de refoulement est détecté par un capteur (30) du flux de refoulement, et
**que** le dispositif de régulation (31-33) réduit le volume de refoulement du moteur hydraulique réglable (13), qui entraîne l'arbre (38) à vitesse de rotation constante, lors d'un accroissement du débit de refoulement détecté par le capteur (30) du débit de refoulement et augmente le volume de refoulement lorsque le débit de refoulement détecté diminue.

3. Dispositif d'entraînement hydrostatique selon la revendication 2, **caractérisé en ce que** le capteur (3) du débit de refoulement est formé par un rétrécissement en forme d'étranglement, au niveau duquel il s'établit une différence de pression proportionnelle au débit de refoulement.

4. Dispositif d'entraînement hydrostatique selon la revendication 2 ou 3, **caractérisé en ce que** le dispositif de régulation (31, 32, 60-62) comprend une soupape de commutation (60), qui relie l'organe de réglage (63), qui règle le volume de refoulement du moteur hydraulique réglable (13) à la canalisation à haute pression (9) du circuit hydraulique (5, 6, 8, 9, 36) de manière à réduire le volume de refoulement du moteur hydraulique réglable (13), lorsque le débit de refoulement détecté par le détecteur (30) du débit de refoulement dépasse un débit de refoulement prédéterminé.

5. Dispositif d'entraînement hydrostatique selon la revendication 2 ou 3, **caractérisé en ce que** le dispositif de régulation (31, 32, 70-76) comporte une soupape de commande (70), qui est reliée à la canalisation à haute pression (9) du circuit hydraulique (5, 6, 8, 9, 36) et à un réservoir de fluide sous pression (39) et- qui charge un organe de réglage (73), qui règle le volume de refoulement du moteur hydraulique réglable (13), par une pression de travail qui dépend du débit de refoulement détecté par le capteur (30) du débit de refoulement.

6. Dispositif d'entraînement hydrostatique selon les revendications 5 et 3, **caractérisé en ce que** l'organe de réglage (73) est chargé par une pression de travail proportionnelle à la différence de pression présente au niveau du capteur (30) du débit de refoulement.

7. Dispositif d'entraînement hydrostatique selon l'une des revendications 1 à 6, **caractérisé en ce que** le dispositif de distribution comporte plusieurs soupapes de commutation (19, 25, 34), qui sont disposées dans les canalisations de dérivation (6, 8, 9), qui alimentent les moteurs hydrauliques (10-13), du circuit hydraulique (5, 6, 8, 9, 36).

8. Dispositif d'entraînement hydrostatique selon la revendication 7, **caractérisé en ce que** la soupape de commutation (19) située dans la canalisation de dérivation (6), qui alimente le premier moteur hydraulique (10), est complètement fermée et peut être commutée entre une première position de commutation, dans laquelle la soupape de commutation (19) est complètement fermée, et une seconde position de commutation, dans laquelle la soupape de commutation définit un passage ouvert.

9. Dispositif d'entraînement hydrostatique selon l'une des revendications 1 à 8, **caractérisé en ce qu'**en aval de l'arbre (28) à vitesse de rotation constante est monté un mécanisme de distribution (50) servant à entraîner en parallèle plusieurs appareils auxiliaires.

10. Dispositif d'entraînement hydrostatique selon la revendication 9, **caractérisé en ce que** des appareils auxiliaires individuels (21, 27) peuvent être couplés de façon amovible au mécanisme de distribution (50) par l'intermédiaire d'accouplements (53, 54) pouvant être déclenchés à distance.

11. Dispositif d'entraînement hydrostatique selon l'une des revendications 1 à 10, **caractérisé en ce qu'**en ce qui concerne les autres appareils auxiliaires (21, 27, 51, 52) il s'agit d'un compresseur de climatisation (26) pour l'installation de climatisation et/ou un compresseur à air comprimé (21) et/ou une pompe à huile (51) et/ou un générateur électrique (52).

12. Dispositif d'entraînement hydrostatique selon la revendication 11, **caractérisé en ce qu'**au moins le compresseur de climatisation (27) est entraîné par l'arbre (28) à vitesse de rotation constante.
